# EUROPÄISCHE PATENTSCHRIFT

(11) **EP 0 587 924 B1**
(45) Veröffentlichungstag und Bekanntmachung des Hinweises auf die Patenterteilung: **04.12.1996**
(21) Anmeldenummer: 92115688.1
(22) Anmeldetag: 14.09.1992
(51) Int. Cl.: B23Q 15/22

(54) **Verfahren zum Verstellen einer Steuerscheibe**
Method for displacing a control disc
Procédé pour déplacer un disque de commande

(43) Veröffentlichungstag der Anmeldung: 23.03.1994
(73) Patentinhaber: Siemens Nixdorf Informationssysteme Aktiengesellschaft, 33102 Paderborn (DE)
(72) Erfinder: Bäuerle, Ralph, 1000 Berlin 20 (DE); Kottwitz, Dietmar, Singapore 2158 (SG)
(74) Vertreter: Fuchs, Franz-Josef, Dr.-Ing.

(56) Entgegenhaltungen:
- CH-A- 321 233
- DE-B- 2 817 209
- US-A- 4 570 113
- DATABASE WPIL Week 8750, Derwent Publications Ltd., London, GB; AN 87-351934 & JP-A-62 254 799 (TOKYO JUKI IND KK) 6. November 1987

## Beschreibung

Die Erfindung betrifft ein Verfahren zum Verstellen einer Steuerscheibe, insbesondere einer Kulissenscheibe einer Schneideinrichtung, bei dem ein elektrischer Motor die Steuerscheibe aus einer fest vorgegebenen Anfangsstellung heraus um einen vorgegebenen Drehwinkel dreht.

Ein derartiges Verfahren, bekannt aus der US-A-4 520 113, wird z.B. zum Steuern einer Kulissenscheibe verwendet, die ein Messer einer Schneideinrichtung verfährt. Der Hub des Messers wird abhängig vom Drehwinkel und/oder von der Drehrichtung verändert. Dadurch ist es möglich, in einer Kassendruckeinrichtung den Kassenbon an- oder völlig durchzuschneiden.

Bei einem bekannten Verfahren ist auf der Welle des Motors eine Codierscheibe angeordnet, mit deren Hilfe Taktsignale erzeugt werden, die jeweils einer Winkeländerung der Steuerscheibe entsprechen. Die Taktsignale werden ausgewertet und der aktuelle Drehwinkel der Steuerscheibe sowie ihre Drehrichtung bestimmt. Beim Erreichen des vorgegebenen Drehwinkels wird der Motor angehalten. Zur Realisierung dieses Verfahrens ist ein hoher mechanischer und elektronischer Aufwand erforderlich, da sowohl die Winkeländerung als auch die Drehrichtung überwacht werden muß.

Es ist Aufgabe der Erfindung, ein Verfahren zum Verstellen einer Steuerscheibe anzugeben, das einfach zu realisieren ist und dennoch genau arbeitet.

Diese Aufgabe wird für ein Verfahren eingangs genannter Art dadurch gelöst, daß die Steuerscheibe in einem vorgegebenem Winkel, der vorzugsweise kleiner als 90° ist, voneinander zwei einen Zielsektor definierende Markierung hat, die bei der Drehbewegung der Steuerscheibe von einem außerhalb der Steuerscheibe ortsfest angeordneten Sensor nacheinander abgetastet werden, wobei der Sensor in der Anfangsstellung der Steuerscheibe von einem Zielradius des Zielsektors in Drehrichtung einen Winkelabstand gleich dem Drehwinkel hat, daß die Laufzeit des Vorbeilaufs der Markierungen am Sensor ermittelt wird, und daß auf das Abtasten der zweiten Markierung hin der Motor angehalten und ihm zum Drehen in die entgegengesetzte Drehrichtung elektrische Energie zugeführt wird, deren Betrag abhängig von der jeweils ermittelten Laufzeit einer Energie-Laufzeit-Charakteristik für den Rücklauf der Steuerscheibe bis zur Zielposition entnommen wird, in der der Zielradius dem Sensor gegenübersteht.

Die Erfindung beruht auf der Überlegung, daß die Winkelgeschwindigkeit der Steuerscheibe nach dem Hochlaufen des Motors annähernd konstant ist. Die Laufzeit in einem als Zielsektor markierten Sektor ist dann ein Maß für die Drehgeschwindigkeit. In dieser Laufzeit sind sämtliche Geschwindigkeitseinflüsse berücksichtig, wie z.B. die Reibung, die Alterung der Lager, die Verschmutzung der Lagerteile des Antriebssystems etc. Wenn nach dem Vorbeilauf des Zielsektors der Motor angehalten, anschließend in der Gegenrichtung gedreht und dabei mit einem von der zuvor ermittelten Laufzeit abhängigen Energiebetrag beaufschlagt wird, so ist es möglich, den Motor innerhalb des Zielsektors in einer Position zum Stillstand zu bringen, die dem gewünschten Drehwinkel entspricht.

Erfindungsgemäß wird der Betrag der Energie einer Energie-Laufzeit-Charakteristik entnommen. Diese Charakteristik ist zuvor anhand von Systemen, bestehend aus Steuerscheibe und Antriebseinheit, in Einmeßvorgängen ermittelt worden. Die Energie-Laufzeit-Charakteristik kann beispielsweise in Form einer Tabelle oder einer Kennlinie vorliegen, die in einem Speicher eines Mikroprozessors abgelegt ist. Im allgemeinen wird eine solche Charakteristik ein progressives Verhalten zeigen, d.h. mit zunehmender Laufzeit wird auch der Betrag der Energie ansteigen.

Dies bedeutet, daß bei einer hohen Winkelgeschwindigkeit der Steuerscheibe und demzufolge einer kurzen Laufzeit die dem Motor nach dem Anhalten zuzuführende Energie niedriger sein muß als bei einer kleinen Winkelgeschwindigkeit und entsprechend langer Laufzeit. Dies ist darauf zurückzuführen, daß bei hoher Winkelgeschwindigkeit das Antriebssystem die zugeführte Energie besser ausnutzt, beispielsweise infolge geringer Lagerreibung, als bei niedriger Winkelgeschwindigkeit, bei sonst gleicher Energiezufuhr. Der Energiebetrag zum Zurückbewegen der Steuerscheibe auf den gewünschten Drehwinkel muß dann entsprechend klein sein. Umgekehrt ist der Energiebetrag zu vergrößern, wenn die Laufzeit zunimmt.

Da in der gemessenen Laufzeit wesentliche Störgrößen wie Lagerverschleiß und Verschmutzung berücksichtigt sind, wird die gewünschte Position mit einer hohen Genauigkeit und Zuverlässigkeit erreicht. Die erzielbare Genauigkeit wird noch dadurch erhöht, daß die Markierungen unmittelbar an der Steuerscheibe angebracht sind.

Beim Verfahren nach der Erfindung ist eine Codierscheibe zum Abbilden des aktuellen Drehwinkels nicht erforderlich. Somit entfällt auch die aufwendige Auswertung der mit der Codierscheibe erzeugten Taktsignale. Das Verfahren berücksichtigt auch Abweichungen des mechanischen Verhaltens des Systems Motor-Steuerscheibe bezüglich der Drehgeschwindigkeit infolge von Fertigungsschwankungen. Ein nach diesem Verfahren arbeitendes System muß daher nach der Installierung nicht abgeglichen werden. Dies ist vorteilhaft, wenn das Verfahren für Systeme angewendet wird, die in hoher Stückzahl gefertigt werden.

Beim Verfahren nach der Erfindung dreht sich die Steuerscheibe zunächst über das Ziel, d.h. den vorgegebenen Drehwinkel, hinaus, bevor sie sich in die gewünschte Zielposition zurückbewegt. Dieser Bewegungsablauf kann bei zahlreichen Anwendungen vorteilhaft sein. Beispielsweise bei der Verwendung der Steuerscheibe als Kulissenscheibe zur Steuerung eines Kulissensteins kann es erforderlich sein, ihn in eine definierte Ausgangsstellung zu bringen, wozu er kurz über seine angestrebte Endposition hinausbewegt werden muß. Auch bei zahlreichen anderen Anwendungen mit regelungstechnischem Charakter ist es bekanntlich erforderlich, eine Zielposition erst nach einem vorangegangenen Überschwingen über diese Position hinaus zu erreichen. Für derartige Anwendungen ist die Erfindung optimal geeignet.

Zum Markieren des Zielsektors können verschiedene Arten von Markierungen verwendet werden. Beispielsweise ist es möglich, induktiv oder kapazitiv wirkende Markierungen und jeweils geeignete Sensoren zum Abtasten derartiger Markierungen einzusetzen.

Bei einer Weiterbildung der Erfindung werden optische Markierungen verwendet, die von einem optischen Sensor abgetastet werden. Derartige Markierungen sind auf sehr einfache Weise an der Steuerscheibe anzubringen, beispielsweise mittels Farbe, Schlitze oder Löcher. Auch sind geeignete optische Sensoren kostengünstig erhältlich. Solche Sensoren können als Lichtschranke oder als Reflexsensor ausgebildet sein und enthalten einen Strahlungssender sowie einen Strahlungsempfänger, die in an sich bekannter Weise zusammenwirken und das Abtasten von Markierungen ermöglichen.

Eine andere Weiterbildung ist dadurch gekennzeichnet, daß der Motor nach dem Anhalten bis zum erneuten Abtasten der zuletzt abgetasteten Markierung mit über der Zeit konstante Energiezuführung gedreht wird

Durch diese Maßnahmen wird die Steuerscheibe kontrolliert bis nahe an ihre Zielposition herangeführt und die nach dem Anhalten des Motors wirksame Haftreibung des Motors und der Steuerscheibe geht nicht in das Ergebnis ein. Demzufolge wird die Zielposition mit noch höherer Genauigkeit angefahren.

Das vorgenannte Ausführungsbeispiel kann dadurch weitergebildet sein, daß der Energieanteil, der dem Motor zum Drehen in die entgegengesetzte Richtung bis zum erneuten Abtasten der zuletzt abgetasteten Markierung zugeführt wird, ermittelt und in der Energie-Laufzeit-Charakteristik berücksichtigt wird, und daß der Betrag der noch dem Motor zuzuführenden Energie mit zunehmendem Energieanteil zunimmt.

Bei diesem Ausführungsbeispiel hängt der dem Motor noch zuzuführende Energiebetrag neben der Laufzeit zusätzlich vom Energieanteil ab, der dem Motor bis zum erneuten Abtasten der zuletzt abgetasteten Markierung zugeführt worden ist. Durch diese Maßnahmen wird erreicht, daß Änderungen im mechanischen Verhalten des Systems Antriebsmotor-Steuerscheibe, wie beispielsweise eine Änderung der Reibung, des Übertragungsverhalten des elektromechanischen Antriebs oder des Lagerspiels, kompensiert werden. Hat sich z.B. die Reibung des Lagers der Steuerscheibe infolge Abriebs erhöht, so erfordert die Bewegung der Steuerscheibe bis zum Erreichen der zuletzt abgetasteten Markierung einen erhöhten Energieaufwand, der sich in dem besagten Energieanteil niederschlägt. Durch die vorgenannten Maßnahmen wird ein noch genaueres Anfahren der Zielposition innerhalb des Zielsektors ermöglicht.

Eine bevorzugte Weiterbildung sieht die Verwendung eines Gleichstrommotors vor, der vorzugsweise nach dem Anhalten mit Stromimpulsen gespeist wird. Dadurch ist es möglich, die Drehgeschwindigkeit der Steuerscheibe durch Variation der Dauer, des Impulspausenverhältnisses und der Impulsfrequenz oder eine Kombination davon einzustellen. Ferner ist die Speisung mit Stromimpulsen mit Hilfe der Digitalelektronik technisch einfach realisierbar.

Ein anderes Ausführungsbeispiel ist dadurch gekennzeichnet, daß der Motor zum Anhalten und/oder nach der Zuführung der elektrischen Energie kurzschlußgebremst wird. Durch diese Maßnahme wird erreicht, daß der Motor nach dem Verlassen des Zielsektors schnell abgebremst wird und so der Abstand von seiner Zielposition minimal wird. Außerdem wird der Motor nach der Zuführung der Energie durch das Haltemoment der kurzgeschlossenen Motorwicklung in seiner Zielposition in einer stabilen Lage gehalten.

Das vorgenannte Ausführungsbeispiel kann dadurch weitergebildet sein, daß der Motor zum Anhalten nach dem Vorbeilauf der Markierungen für eine Wartezeit kurzgeschlossen wird, die mit zunehmender Laufzeit abnimmt. Dadurch wird die Zeit bis zum Drehen in die entgegengesetzte Richtung zum Zielsektor minimiert, da die Zeit zum Abbremsen des Motors auf die Laufzeit und damit auf die Winkelgeschwindigkeit der Steuerscheibe abgestimmt wird. Ist z.B. die Laufzeit relativ groß, was einer niedrigen Winkelgeschwindigkeit entspricht, so kann eine kurze Zeit zum Abbremsen bis zum Stillstand des Motors ausreichen. Die Wartezeit kann dementsprechend klein sein, und die Gesamtzeit zum Verstellen der Steuerscheibe wird verkürzt.

Ein Ausführungsbeispiel der Erfindung wird im folgenden an Hand von Zeichnungen erläutert. Darin zeigt,
- Fig. 1: eine Schneideinrichtung eines Druckers mit einer als Kulisssenscheibe ausgebildeten Steuerscheibe,
- Fig. 2: einen von der Schneideinrichtung geschnittenen Papierstreifen,
- Fig. 3: die Kulissenscheibe mit einer markierten Zone, einem Reflexsensor, einem Gleichstrommotor und elektronischen Steuereinheiten,
- Fig. 4a,b: ein Flußdiagramm des Verfahrens zum Verstellen der Kulissenscheibe,
- Fig. 5: Diagramme von Betriebszuständen der Kulissenscheibe und des Gleichstrommotors über der Zeit, und
- Fig. 6: den Aufbau eines Parameterspeichers.

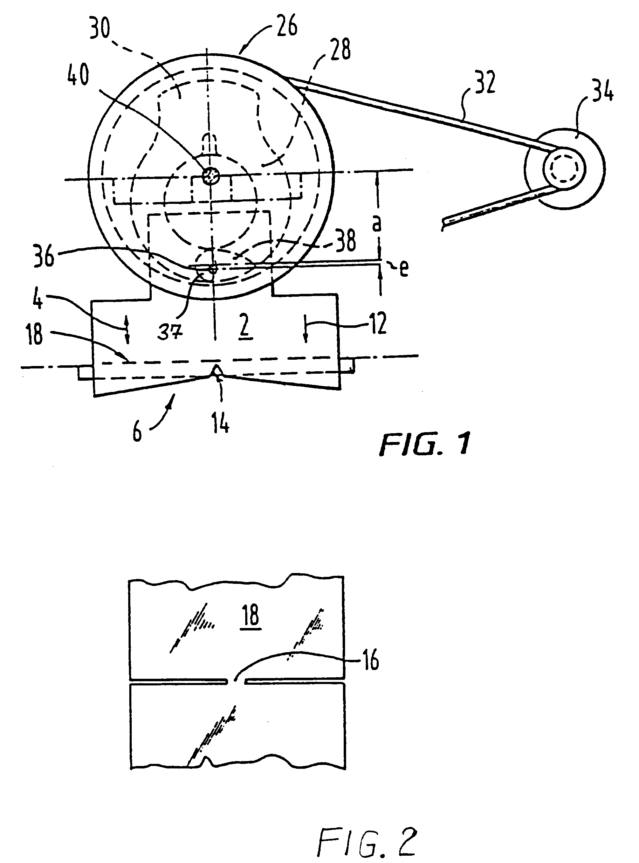

In Fig. 1 ist eine Schneideinrichtung eines Kassendruckers dargestellt, bei der die Erfindung verwirklicht ist. Im folgenden werden nur die für das Verständnis der vorliegenden Erfindung wesentlichen Merkmale der Schneideinrichtung erläutert. Weitere technische Erläuterungen sind der EP 0 191 907 B1 entnehmbar. Die Schneideinrichtung hat ein Messer 2, das die Form eines auf dem Kopf stehenden T hat. Es ist in Richtung des Doppelpfeils 4 verschiebbar gelagert. Eine Schneide 6 des Messers 2 hat mittig eine Ausnehmung 14. Deren Breite entspricht der Breite eines Steges 16 (siehe Fig. 2) einer Papierbahn 18, wenn ein Teilschnitt erfolgt, wie noch näher erläutert wird.

Zum Antreiben des Messers 2 in Richtung des Doppelpfeils 4 dient eine Kulissenscheibe 26. Sie hat eine Kulissenbahn 28, die eine in radialer Richtung nach außen sich erstreckende Verbreiterung 30 hat. Die Kulissenscheibe 26 ist über einen Antriebsriemen 32 mit einem Gleichstrommotor 34 verbunden.

In die Kulissenbahn 28 greift ein über eine Achse 36 drehbar auf der Oberseite des Messers 2 befestigter Kulissenstein 38 ein, der annähernd die Form eines Tropfens hat. Die Kulissenbahn 28 ist exzentrisch zur Drehachse 40 der Kulissenscheibe 26 angeordnet. Bei einer Drehung der Kulissenscheibe 26 um 360° führt der Kulissenstein 38 und damit das Messer 2 eine Bewegung in Richtung des Doppelpfeils 4 aus.

Die Achse 36 des Kulissensteins 38 ist in seiner Breitenrichtung um den Betrag e aus der Mitte seitlich versetzt. Dies hat zur Folge, daß der Hub des Messers 2 in seiner in der Fig. 1 gezeigten untersten Position einmal a + e und ein andermal a - e ist, je nachdem, ob der Kopf des Kulissensteins 38 in der Fig. 1 nach links bzw. nach rechts zeigt, wobei a der Abstand der Drehachse 40 von der Mittellinie der Kulissenbahn 28 ist.

In der Ausgangsstellung befindet sich die Verbreiterung 30 in einer unteren Position, d.h. um 180° gegenüber der in Fig. 1 dargestellten Position gedreht. Der Kulissenstein 38 befindet sich dann innerhalb der Verbreiterung 30. Die Kulissenscheibe 26 ist so konstruiert, daß der Kulissenstein 38 sowohl bei einer Drehung im Uhrzeigersinn als auch im Gegenuhrzeigersinn jeweils mit dem Kopf 37 zuerst in die Kulissenbahn 28 einfährt. Bei einer Drehung der Kulissenscheibe 26 aus der Ausgangstellung im Uhrzeigersinn hat folglich das Messer 2 in seiner in der Fig. 1 dargestellten untersten Stellung einen maximalen Abstand a + e von der Drehachse 40 und bei einer Drehung im Gegenuhrzeigersinn einen maximalen Abstand von a - e . Der unterschiedliche Hub dient dazu, den Papierstreifen 18 in Fig. 2 entweder ganz oder nur teilweise abzutrennen. Eine solche Schneideinrichtung wird z.B. bei Kassendruckern zum Schneiden eines Kassenbons verwendet.

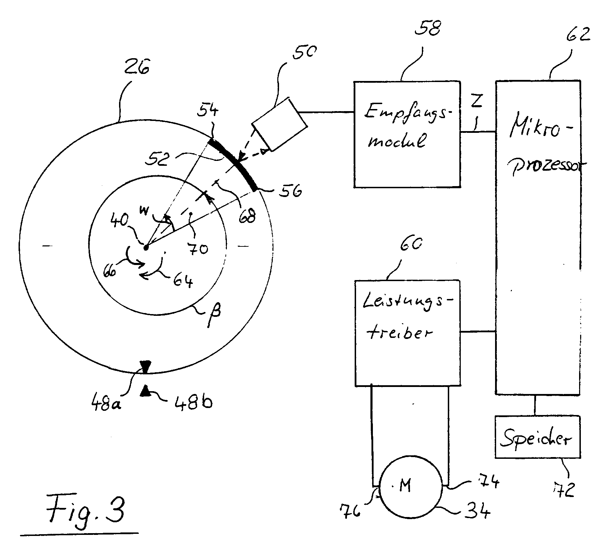

In Fig. 3 ist die Kulissenscheibe 26 zusammen mit weiteren Komponenten dargestellt. Eine längs des Umfangs der Kulissenscheibe 26 markierte Zone 52 mit gegenüber den angrenzenden Zonen erhöhtem Reflexionsgrad definiert einen Zielsektor 70. Die Hell-Dunkel-Übergänge an den Endabschnitten der Zone 52 bilden Markierungen 54, 56. Zum Schneiden dreht sicht die Kulissenscheibe 26 aus ihrer mit Marken 48a und 48b bezeichneten Ausgangsstellung um eine volle Umdrehung in eine der beiden durch Pfeile 64, 66 angedeuteten Drehrichtungen. Die Marke 48a dreht sich hierbei mit der Kulissenscheibe 26 relativ zur ortsfesten Marke 48b. Ein Reflexsenor 50 ist ortsfest außerhalb der Kulissenscheibe 26 angeordnet. In der Anfangsstellung der Kulissenscheibe 26, in der die Marken 48a und 48b einander gegenüberstehen, hat der Reflexsensor 50 von der Winkelhalbierenden 68 des Zielsektors 70 einen Winkelabstand gleich einem Drehwinkel β, um den die Kulissenscheibe 26 zu verstellen ist. Da der Drehwinkel β 360° beträgt, befindet sich der Reflexsensor 50 sowohl in der Ausgangsstellung als auch nach dem Erreichen der Zielposition innerhalb des Zielsektors 70 und steht jeweils der Winkelhalbierenden 68 gegenüber.

Der Reflexsensor 50 hat einen Strahlungssender (nicht dargestellt), der auf den Umfangsbereich der Kulissenscheibe 26, in dem sich die markierte Zone 52 befindet, Strahlung aussendet. Die reflektierte Strahlung wird von einem im Reflexsensor 50 enthaltenen Strahlungsempfänger (nicht dargestellt) erfaßt und in ein elektrisches Signal gewandelt. Dieses wird von einem Empfangsmodul 58 ausgewertet, das ein Zonensignal Z mit zwei Zuständen erzeugt, die angeben, ob der Reflexsensor 50 der markierten Zone 52 gegenübersteht oder nicht. Am Hell-Dunkel-Übergang bzw. am Dunkel-Hell-Übergang der Zone 52, d.h. an den Markierungen 54 bzw. 56 ändert das Zonensignal Z jeweils seinen Zustand. Das Zonensignal Z wird einem Mikroprozessor 62 zur weiteren Verarbeitung zugeführt. Der Mikroprozessor 62 steuert einen Leistungstreiber 60, der einen Gleichstrommotor 34 mit Gleichstrom versorgt oder diesen an seinen Anschlußklemmen 74, 76 kurzschließen kann. Der Mikroprozessor 62 greift ferner auf einen Speicher 72 zu, in dem das Programm zur Steuerung der einzelnen Ablaufschritte sowie Parameter gespeichert sind, die zum Steuern des Gleichstrommotors 34 abgerufen werden, wie noch näher beschrieben wird.

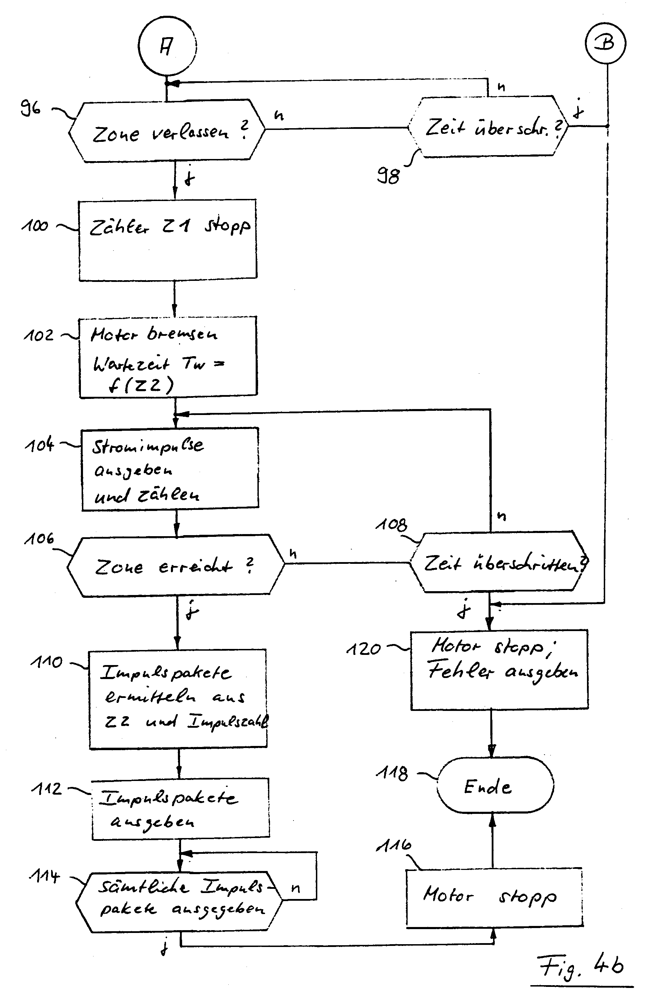

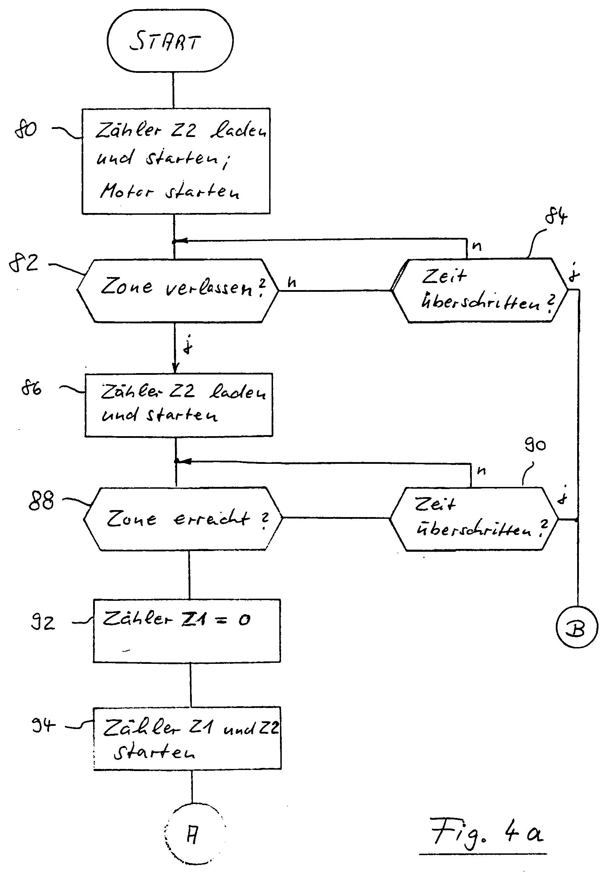

In den Fig. 4a und 4b ist ein Flußdiagramm dargestellt, das die einzelnen Verfahrensschritte zum Verstellen der Kulissenscheibe 26 um eine volle Umdrehung wiedergibt. Die einzelnen Verfahrensschritte werden beim Abarbeiten eines im Mikroprozessor 62 enthaltenen Programms ausgeführt. Zum Auswerten von Zeitbedingungen sind im Mikroprozessor 62 mittels Software zwei Zähler Z1, Z2 verwirklicht, die Taktimpulse konstanter Periodendauer zählen. Der Zähler Z1 dient zum Ermitteln der Laufzeit des Vorbeilaufs der Markierungen 54, 56, d.h. der Zone 52, am Reflexsensor 50. Der Zähler Z2 dient zur Überwachung von Bewegungsabläufen. Sind diese innerhalb einer durch den Anfangszustand des Zählers Z2 definierten Zeit nicht abgeschlossen, so wird ein Fehlersignal erzeugt.

Nach dem Start des Ablaufprogramms wird gemäß Fig. 4a im Verfahrensschritt 80 der Zähler Z2 auf einen Anfangszählstand geladen, anschließend das Herabzählen oder Dekrementieren des Zählers Z2 abhängig von den Taktimpulsen des Mikroprozessor 62 gestartet und der Gleichstrommotor 34 mit Strom versorgt. Im Verfahrensschritt 82 wird anhand des Zonensignals Z geprüft, ob die Zone 52 aus dem Erfassungsbereich des Reflexsensor 50 herausbewegt worden ist. Wenn dies nicht der Fall ist, wird im Verfahrensschritt 84 geprüft, ob die durch den Zähler Z2 vorgegebene Zeit für diesen Verfahrensabschnitt überschritten ist. Bei Zeitüberschreitung, was auf ein defektes Antriebssystem hindeutet, wird zum Verfahrensschritt 120 (Fig. 4b) verzweigt, in dem der Gleichstrommotor 34 angehalten, ein Fehlersignal erzeugt und das Ablaufprogramm verlassen wird.

Wenn die vorgegebene Zeit noch nicht abgelaufen ist, wird der Verfahrensschritt 82 so lange wiederholt, bis anhand des Zonensignals Z festgestellt wird, daß sich die Zone 52 außerhalb des Reflexsensor 50 befindet. Anschließend wird zum Verfahrensschritt 86 weitergegangen, in dem der Zähler Z2 wiederum auf einen Anfangszählstand zum Überwachen des nächsten Verfahrensabschnitts geladen und gestartet wird.

Im nachfolgenden Verfahrensschritt 88 wird anhand des Zonensignals Z geprüft, ob die Zone 52 nach dem Drehen der Kulissenscheibe 26 um etwa 360° in den Erfassungsbereich des Reflexsensors 50 gelangt ist. Hierbei ist wiederum die Zeitüberwachung mittels des Zählers Z2 in Verfahrensschritt 90 wirksam. Wird die Zone 52 nicht innerhalb der vorgegebenen Zeit erreicht, so wird zum vorhin beschriebenen Verfahrensschritt 120 verzweigt und ein Fehler angezeigt.

Signalisiert das Zonensignal Z, daß der Reflexsensor 50 eine der Markierungen 54, 56 erfaßt hat, so wird im nachfolgenden Verfahrensschritt 92 der Zähler Z1 auf den Wert 0 gesetzt. Anschließend werden im Verfahrensschritt 94 beide Zähler Z1, Z2 gestartet, wobei der Zähler Z1 bei jedem Taktimpuls inkrementiert und der Zähler Z2 dekrementiert wird.

Im darauffolgenden Verfahrensschritt 96 wird mittels des Zonensignals Z überprüft, ob beide Markierungen 54, 56 am Reflexsensor 50 vorbeigelaufen sind. Dieser Vorbeilauf wird in Schritt 98 mit Hilfe des Zählers Z2 auf Zeitüberschreitung in bereits beschriebener Weise überwacht. Bei positivem Ergebnis in Schritt 96 wird im nachfolgenden Verfahrensschritt 100 der Zähler Z1 gestoppt. Sein Zählstand entspricht der Laufzeit des Vorbeilaufs der Zone 52 am Reflexsensor 50.

Im darauffolgenden Schritt 102 wird der Leistungstreiber 60 durch den Mikroprozessor 62 so gesteuert, daß der Gleichstrommotor 34 an seinen Klemmen 74, 76 für eine Wartezeit Tw kurzgeschlossen wird, wodurch der Gleichstrommotor 34 abgebremst und angehalten wird. Die Wartezeit Tw wird umgekehrt proportional zur ermittelten Laufzeit, d.h. dem Zählerstand des Zählers Z1, eingestellt. Sie ist so bemessen, daß der Gleichstrommotor 34 sicher zum Stillstand kommt.

Anschließend wird im Verfahrensschritt 104 der Gleichstrommotor 34 mit Stromimpulsen gespeist, die ihn mit langsamer Geschwindigkeit in die entgegengesetzte Richtung drehen. Die Stromimpulse werden dabei fortlaufend in einem weiteren Zähler Z3 gezählt. Im Schritt 106 wird festgestellt, ob die zuletzt abgetastete Markierung, die je nach Drehrichtung die Markierung 54 oder 56 ist, vom Reflexsensor 50 erfaßt wird. Auch dieser Verfahrensabschnitt wird in Schritt 108 in vorhin beschriebener Weise auf Zeitüberschreitung überwacht.

Wenn die Markierung 54 bzw. 56 vom Reflexsensor 50 erfaßt worden ist, werden im darauffolgenden Schritt 110 die Parameter von Impulspaketen ermittelt, mit denen der Gleichstrommotor 34 zu speisen ist, um seine endgültige Zielposition zu erreichen. Die Impulspakete setzen sich aus Stromimpulsen konstanter Stromstärke und Dauer zusammen. Ein erster Parameter P1 gibt die Zahl der Stromimpulse pro Impulspaket an; ein zweiter Parameter P2 die Zahl der an den Gleichstrommotor 34 insgesamt auszugebenden Impulspakete.

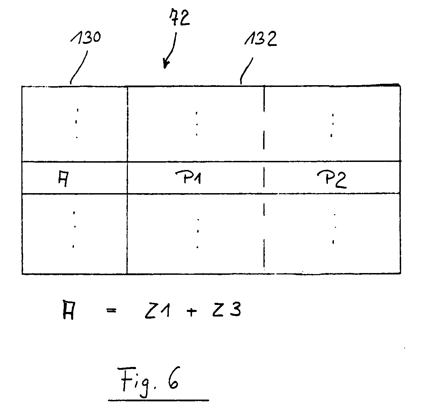

Um für verschiedene Betriebszustände der Schneideeinrichtung passende Parameter P1, P2 bereitzustellen, sind diese in Tabellenform im Speicher 72 des Mikroprozessors 62 abgelegt. Der Aufbau des Speichers 72 zum Speichern der Parameter P1, P2 ist in Fig. 6 dargestellt. Der Zugriff auf die in einem Speicherbereich 132 abgespeicherten Parameter P1, P2 erfolgt jeweils über eine Speicheradresse A eines Adressbereichs 130, die aus der Summe des Zählstandes des Zählers Z1 plus der Zahl der im Verfahrensschritt 104 ausgegebenen Stromimpulse, d.h. dem aktuellen Zählstand des Zählers 3, gebildet wird. Unter den so gebildeten Adressen A des Speichers 132 sind zuvor die empirisch ermittelten Parameter P1, P2 der Impulspakete abgespeichert worden, die ein genaues Anfahren der gewünschen Drehposition gewährleisten, bei der der Reflexsensor 50 der Winkelhalbierenden 68 des Zielsektors 70 gegenübersteht.

Im weiteren Verfahrensablauf der Fig. 4b werden im Verfahrensschritt 112 die im Schritt 110 ermittelten Impulspakete in vorgegebenen konstanten Zeitabständen ausgegeben. Nach der Ausgabe sämtlicher Impulspakete, was im Verfahrensschritt 114 überwacht wird, wird der Gleichstrommotor 34 an seinen Klemmen 74, 76 kurzgeschlossen, so daß der Gleichstrommotor 34 ein hohes Haltemoment hat. Der Gleichstrommotor 34 befindet sich dann in der gewünschten Drehposition, die um 360° gegenüber der Ausgangsposition versetzt ist. Anschließend wird das vom Mikroprozessor 62 abgearbeitete Programm, das den Verfahrensablauf steuert, in Schritt 118 verlassen.

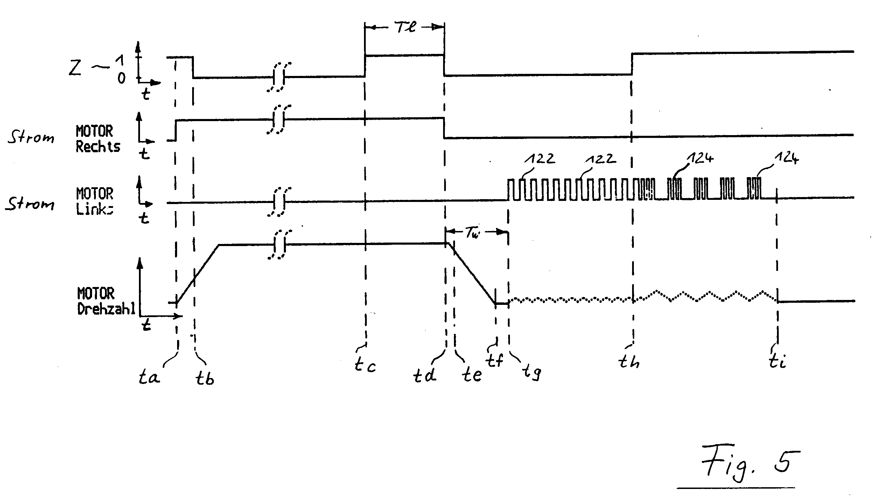

In Fig. 5 sind in vier Diagrammen Zustände der Kulissenscheibe 26 und des Gleichstrommotors 34 über der Zeit t dargestellt. Im oberen Bildteil der Fig. 5 ist das Zonensignal Z in zwei logischen Zuständen 0 und 1 dargestellt. Der Zustand 0 kennzeichnet hierbei, daß der Reflexsensor 50 sich außerhalb der Markierungen 54, 56 befindet, d.h. die Zone 52 nicht erfaßt. Der Zustand 1 kennzeichnet, daß der Reflexsensor 50 der Zone 52 gegenübersteht.

Die beiden mittleren Diagramme der Fig. 5 zeigen Kennlinien des dem Gleichstrommotor 34 zur Drehung nach rechts bzw. nach links zuzuführenden Stroms. Die untere Kennlinie gibt die Drehzahl des Gleichstrommotors 34 an, von der die Winkelgeschwindigkeit der Kulissenscheibe 26 direkt abhängt.

Die verschiedenen Zustände der Kulissenscheibe 26 und des Gleichstrommotors 34 werden im folgenden zu Zeitpunkten ta bis ti erläutert. Zum Zeitpunkt ta wird dem Gleichstrommotor 34 kontinuierlich Strom zugeführt, der ihn in Rechtsdrehung versetzt. Folglich wird auch die Kulissenscheibe 26 in Richtung des Pfeils 64 (Fig. 3) gedreht. Zum Zeitpunkt tb ist die Kulissenscheibe 26 so weit gedreht, daß die Markierung 54 am Reflexsensor 50 vorbeiläuft und das Zonensignal Z in den logischen Zustand 0 wechselt.

Zum Zeitpunkt tc erfaßt der Reflexsensor 50 die Markierung 56; das Zonensignal Z wechselt in den Zustand 1. Zum Zeitpunkt td ist die gesamte Zone 52 am Reflexsensor 50 vorbeigelaufen und die Markierung 54 wird erfaßt. Das Zonensignal Z wechselt in den Zustand 0. Der zeitliche Abstand Tl zwischen den Zeitpunkten tc und td wird mit Hilfe des Zählers Z1 gemessen. Der Strom zum Rechtsdrehen des Gleichstrommotors 34 wird zum Zeitpunkt td abgeschaltet und seine Klemmen 74, 76 werden zum Zeitpunkt te kurzgeschlossen. Der Gleichstrommotor 34 wird somit als Stromgenerator betrieben, dadurch abgebremst und steht im Zeitpunkt tf still.

Im Zeitpunkt tg ist die Wartezeit Tw, in der der Kurzschluß wirksam ist, abgelaufen ,und der Gleichstrommotor 34 wird mit Stromimpulsen 122 beaufschlagt, die ihn langsam in die entgegengesetzten Richtung, d.h. nach links in Richtung des Pfeils 66 drehen. Zum Zeitpunkt th erfaßt der Reflexsensor 50 die Markierung 54; das Zonensignal Z nimmt den Zustand 1 an. Anschließend werden Impulspakete 124 an den Gleichstrommotor 34 ausgegeben, die ihn weiter in Drehrichtung "links" drehen. Nachdem sämtliche Impulspakete ausgegeben worden sind, wird der Gleichstrommotor 34 kurzschlußgebremst. Zum Zeitpunkt ti hat die Kulissenscheibe 26 die gewünschte, um 360° gegenüber ihrer Ausgangsstellung 48a, 48b verdrehte Position erreicht.

Es ist noch anzumerken, daß die Erfindung nicht auf den Drehwinkel β = 360° gemäß Fig. 3 beschränkt ist, sondern auch beliebige andere Drehwinkel umfaßt, um die eine Steuerscheibe von einer beliebigen festen Ausgangsstellung aus verstellt werden soll. Hierfür ist lediglich der Reflexsensor 50 in gewünschter Drehrichtung relativ zur Ausgangsstellung in einem Winkelabstand gleich dem Drehwinkel anzuordnen, und die zuvor beschriebenen Verfahrensschritte sind entsprechend anzuwenden. Die Ausgangsposition kann dabei durch mechanische Anschläge, einen weiteren gegenüber der Ausgangsstellung der Steuerscheibe angebrachten Sensor, der die Markierungen 54, 56 abtastet und/oder durch weitere Markierungen auf der Steuerscheibe festgelegt sein.

## Patentansprüche

1. Verfahren zum Verstellen einer Steuerscheibe, insbesondere einer Kulissenscheibe einer Schneideinrichtung, bei dem ein elektrischer Motor die Steuerscheibe aus einer fest vorgegebenen Anfangsstellung heraus um einen vorgegebenen Drehwinkel dreht, dadurch **gekennzeichnet,** daß die Steuerscheibe (26) in einem vorgegebenen Winkel (w) voneinander, der vorzugsweise kleiner als 90° ist, zwei einen Zielsektor (70) definierende Markierungen (54, 56) hat, die bei der Drehbewegung der Steuerscheibe (26) von einem außerhalb der Steuerscheibe ortsfest angeordneten Sensor (50) nacheinander abgetastet werden, wobei der Sensor (50) in der Anfangsstellung der Steuerscheibe (26) von einem Zielradius (68) des Zielsektors (70) in Drehrichtung einen Winkelabstand gleich dem Drehwinkel (β) hat, daß die Laufzeit (T1) des Vorbeilaufs der Markierungen (54, 56) am Sensor (50) ermittelt wird, und daß auf das Abtasten der zweiten Markierung (54 bzw. 56) hin der Motor (34) angehalten und ihm zum Drehen in die entgegengesetzte Drehrichtung elektrische Energie zugeführt wird, deren Betrag abhängig von der jeweils ermittelten Laufzeit (T1) einer Energie-Laufzeit-Charakteristik für den Rücklauf der Steuerscheibe (26) bis zur Zielposition entnommen wird, in der der Zielradius (68) dem Sensor (50) gegenübersteht.

2. Verfahren nach Anspruch 1, dadurch **gekennzeichnet,** daß der Motor (34) die Steuerscheibe (26) aus einer Anfangsstellung heraus wahlweise in einer der beiden Drehrichtungen (64, 66) um den Drehwinkel (β), vorzugsweise um 360° dreht.

3. Verfahren nach einem der vorhergehenden Ansprüche, dadurch **gekennzeichnet,** daß als Markierung optische Markierungen (54, 56) verwendet werden, die von einem optischen Sensor (50) abgetastet werden, wobei vorzugsweise am äußeren Umfang der Steuerscheibe (26) eine Zone (52) mit erhöhtem Reflexionsvermögen vorgesehen ist, deren Hell-Dunkel-Übergang und Dunkel-Hell-Übergang zur jeweils angrenzenden Zone der Steuerscheibe (26) je eine Markierung (56 bzw. 54) bilden, die von einem optischen Reflexsensor (50) abgetastet werden.

4. Verfahren nach einem der vorhergehenden Ansprüche, dadurch **gekennzeichnet,** daß der Motor (34) nach dem Anhalten bis zum erneuten Abtasten der zuletzt abgetasteten Markierung (54 oder 56) mit über der Zeit konstanter Energiezuführung gedreht wird.

5. Verfahren nach Anspruch 4, dadurch **gekennzeichnet,** daß der Energieanteil, der dem Motor (34) zum Drehen in die entgegengesetzte Richtung bis zum erneuten Abtasten der zuletzt abgetasteten Markierung (54 oder 56) zugeführt wird, ermittelt wird, und daß der Betrag der noch dem Motor (34) zuzuführenden Energie mit zunehmendem Energieanteil zunimmt.

6. Verfahren nach einem der vorhergehenden Ansprüche, dadurch **gekennzeichnet,** daß als Motor ein Gleichstrommotor (34) verwendet wird.

7. Verfahren nach Anspruch 6, dadurch **gekennzeichnet,** daß dem Gleichstrommotor (34) zumindest nach dem besagten Anhalten (tf) elektrische Energie in Form von Stromimpulsen (122, 124) zugeführt wird.

8. Verfahren nach Anspruch 7, dadurch **gekennzeichnet,** daß die Stromimpulse (122) konstante Stärke und Dauer haben und ihre Zahl von der Laufzeit (T1) abhängt.

9. Verfahren nach Anspruch 7, dadurch **gekennzeichnet,** daß der Gleichstrommotor (34) nach dem Anhalten zunächst mit ersten Strominpulsen (122) vorgegebener Dauer und Stromstärke gespeist wird, die den Gleichstrommotor (34) in der entgegengesetzten Richtung (64 oder 66) bis zum erneuten Abtasten der zuletzt abgetasteten Markierung (54 oder 56) drehen, und daß dann der Gleichstrommotor (34) mit zweiten Stromimpulsen (124) vorgegebener Dauer und Stromstärke gespeist wird, deren Zahl von der Laufzeit (T1) und der Zahl der ersten Stromimpulse (122) abhängt.

10. Verfahren nach Anspruch 9, dadurch **gekennzeichnet,** daß die zweiten Stromimpulse zu Impulspaketen (124) konstanter Periodendauer zusammengefaßt werden, wobei die Zahl der zweiten Stromimpulse je Impulspaket (124) und die Zahl der Impulspakete (124) vorzugsweise abhängig von der Laufzeit (T1) und der Zahl der ersten Stromimpulse (122) ermittelt wird.

11. Verfahren nach einem der vorhergehenden Ansprüche, dadurch **gekennzeichnet,** daß während des Vorbeilaufs der Markierungen (54, 56) am Sensor (50) ein Zähler (Z1) Taktimpulse konstanter Periodendauer zählt, und daß der dem Motor (34) zugeführte Betrag der Energie vom Zählerstand des Zählers (Z1) abhängt.

12. Verfahren nach einem der Ansprüche 9 bis 11, dadurch **gekennzeichnet,** daß den möglichen Summenwerten aus der jeweiligen Zahl der ersten Stromimpulse (122) plus dem jeweiligen Endwert des Zählers (Z1) jeweils ein erster Zahlenwert (P1), der die Zahl der zweiten Stromimpulse je Impulspaktet (124) angibt, sowie ein zweiter Zahlenwert (P2) zugeordnet wird, der die Gesamtzahl der Impulspakete (124) angibt, mit denen der Gleichstrommotor (34) gespeist wird, und daß die ersten und zweiten Zahlenwerte (P1, P2) in einem Speicher (72, 132) gespeichert werden, wobei vorzugsweise der erste (P1) und der zweite Zahlenwert (P2) zusammengefaßt und unter einer Adresse (A) abgespeichert werden, die dem jeweiligen Summenwert entspricht.

13. Verfahren nach einem der vorgehgehenden Ansprüche, dadurch **gekennzeichnet,** daß der Motor (34) zum Anhalten und/oder nach Abschluß der Zuführung von elektrischer Energie kurzschlußgebremst wird.

14. Verfahren nach Anspruch 13, dadurch **gekennzeichnet,** daß der Motor (34) vor dem Drehen in die entgegengesetzte Richtung (64 oder 66) für eine Wartezeit (Tw) kurzgeschlossen wird, die mit zunehmender ermittelter Laufzeit (T1) kürzer ist.

15. Verfahren nach einem der vorhergehenden Ansprüche, dadurch **gekennzeichnet,** daß der Sensor (50) zu Beginn der Drehbewegung (ta) für eine vorgegebene Zeit, die vorzugsweise mindestens gleich der erwarteten Laufzeit (T1) ist, inaktiv geschaltet wird.

16. Verfahren nach einem der vorhergehenden Ansprüche, dadurch **gekennzeichnet,** daß der Sensor (50) von der Ausgangsstellung zur Winkelhalbierenden (68) des Zielsektors (70) einen Winkelabstand gleich dem Drehwinkel (β) hat.

17. Verfahren nach einem der vorhergehenden Ansprüche, dadurch **gekennzeichnet,** daß der Abstand der Markierungen (54, 56) größer als der Detektionsbereich des Sensors (50) ist, wobei der Winkelabstand der Markierungen (54, 56) voneinander im Bereich von 1° bis 45°, vorzugsweise im Bereich von 3° bis 5° liegt.

18. Verfahren nach einem der vorhergehenden Ansprüche, dadurch **gekennzeichnet,** daß der Betrag der Energie, der der Energie-Laufzeit-Charakteristik entnommen wird, mit zunehmender Laufzeit (T1) größer wird.

## Claims

1. Method for adjusting a control cam, preferably a slotted cam of a cutting device, in the case of which an electric motor rotates the control cam from a fixed predetermined initial position through a predetermined rotation angle, characterized in that the control cam (26) has two markings (54, 56) at a predetermined angle (w) from one another, which is preferably less than 90°, which markings (54, 56) define a target sector (70) and are scanned successively during the rotational movement of the control cam (26) by a sensor (50) which is arranged in a fixed position outside the control cam, the sensor (50) having an angular separation in the rotation direction from a target radius (68) of the target sector (70), in the initial position of the control cam (26), which angular separation is equal to the rotation angle (β), in that the delay time (T1) for the markings (54, 56) to move past the sensor (50) is determined, and in that the motor (34) is stopped when the second marking (54 or 56) is scanned and electrical energy is fed to said motor (34) in order to rotate it in the opposite rotation direction, the magnitude of which electrical energy is taken, as a function of the respectively determined delay time (T1), from an energy/delay-time characteristic for the control cam (26) to return to the target position at which the target radius (68) is opposite the sensor (50).

2. Method according to Claim 1, characterized in that the motor (34) optionally rotates the control cam (26) from an initial position in one of the two rotation directions (64, 66) through the rotation angle (β), preferably through 360°.

3. Method according to one of the preceding claims, characterized in that optical markings (54, 56) are used as the marking and are scanned by an optical sensor (50), a zone (52) having an increased reflection capability being provided preferably on the outer circumference of the control cam (26), the brightness/darkness transition and darkness/lightness transition of which with respect to the respectively adjacent zone of the control cam (26) each form a marking (56 and 54 respectively), which are scanned by an optical reflection sensor (50).

4. Method according to one of the preceding claims, characterized in that, after stopping, the motor (34) is rotated until the last scanned marking (54 or 56) is scanned again, using a power supply which is constant with respect to time.

5. Method according to Claim 4, characterized in that the energy component which is fed to the motor (34) for rotation in the opposite direction until the last scanned marking (54 or 56) is scanned again is determined, and in that the amount of the energy still to be fed to the motor (34) increases as the energy component increases.

6. Method according to one of the preceding claims, characterized in that a direct-current motor (34) is used as the motor.

7. Method according to Claim 6, characterized in that the direct-current motor (34) is fed, at least after the said stop (tf) with electrical power in the form of current pulses (122, 124).

8. Method according to Claim 7, characterized in that the current pulses (122) have a constant intensity and duration, and their number depends on the delay time (T1).

9. Method according to Claim 7, characterized in that, after stopping, the direct-current motor (34) is initially fed with first current pulses (122) of predetermined duration and current intensity, which rotate the direct-current motor (34) in the opposite direction (64 or 66) until the last scanned marking (54 or 56) is scanned again, and in that the direct-current motor (34) is then fed with second current pulses (124) of a predetermined duration and current intensity, whose number depends on the delay time (T1) and the number of first current pulses (122).

10. Method according to Claim 9, characterized in that the second current pulses are combined to form pulse packets (124) with a constant period duration, the number of second current pulses per pulse packet (124) and the number of pulse packets (124) preferably being determined as a function of the delay time (T1) and the number of first current pulses (122).

11. Method according to one of the preceding claims, characterized in that, while the markings (54, 56) are moving past the sensor (50), a counter (Z1) counts clock pulses of constant period duration, and in that the amount of energy fed to the motor (34) depends on the count of the counter (Z1).

12. Method according to one of Claims 9 to 11, characterized in that in each case a first count (P1), which indicates the number of second current pulses per pulse packet (124), is assigned to the possible total values formed from the respective number of first current pulses (122) plus the respective final value of the counter (Z1), and a second count (P2), which indicates the total number of pulse packets (124) with which the direct-current motor (34) is fed, is also assigned thereto, and in that the first and second counts (P1, P2) are stored in a memory (72, 132), the first count (P1) and the second count (P2) preferably being combined and stored at an address (A) which corresponds to the respective total value.

13. Method according to one of the preceding claims, characterized in that the motor (34) is plug-braked to stop it and/or after completion of the feeding of electrical energy.

14. Method according to Claim 13, characterized in that the motor (34) is short-circuited for a waiting time (Tw) before rotation in the opposite direction (64 or 66), which waiting time (Tw) becomes shorter as the determined delay time (T1) increases.

15. Method according to one of the preceding claims, characterized in that the sensor (50) is switched to be inactive at the start of the rotational movement (ta) for a predetermined time which is preferably at least equal to the expected delay time (T1).

16. Method according to one of the preceding claims, characterized in that the sensor (50) is at an angular separation, equal to the rotation angle (β), from the original position with respect to the angle bisector (68) of the target sector (70).

17. Method according to one of the preceding claims, characterized in that the interval between the markings (54, 56) is greater than the detection region of the sensor (50), the angular interval of the markings (54, 56) from one another being in the range from 1° to 45°, preferably in the range from 3° to 5°.

18. Method according to one of the preceding claims, characterized in that the amount of energy which is taken from the energy/delay-time characteristic becomes greater as the delay time (T1) increases.

## Revendications

1. Procédé de déplacement d'un disque de commande, notamment d'un disque de coulisse d'un dispositif de découpe, dans lequel un moteur électrique entraîne en rotation le disque de commande suivant un angle de rotation prescrit à partir d'une position de départ prescrite de façon fixe, **caractérisé par le fait que** le disque de commande (26) comporte deux repères (54, 56) écartés l'un de l'autre d'un angle (w) prescrit qui est de préférence inférieur à 90°, qui définissent un secteur de visée (70), et qui sont balayés successivement lors du mouvement de rotation du disque de commande (26) par un détecteur (50) disposé à demeure en dehors du disque de commande, le détecteur (50) ayant dans la position de départ du disque de commande (26) un écartement angulaire par rapport à un rayon de visée (68) du secteur de visée (70) qui, dans le sens de rotation, est égal à l'angle de rotation (β), que la durée (T1) de passage des repères (54, 56) devant le détecteur (50) est déterminée, et que, après le balayage du second repère (54 ou 56), le moteur (34) est arrêté et que pour le faire tourner dans le sens inverse, il est alimenté en énergie électrique dont la quantité est déterminée en fonction de la durée (T1) de passage déterminée chaque fois d'une caractéristique énergie-durée de passage pour le retour du disque de commande (26) à la position de visée, dans laquelle le rayon de visée (68) est en face du détecteur (50).

2. Procédé selon la revendication 1, **caractérisé par le fait que**, à partir d'une position de départ, le moteur (34) entraîne en rotation le disque de commande (26) suivant l'angle de rotation (β), au choix, dans l'un des deux sens de rotation (64, 66), de préférence de 360°.

3. Procédé selon l'une des revendications précédentes, **caractérisé par le fait que** les repères utilisés sont des repères optiques (54, 56) qui sont balayés par un détecteur optique (50), il est prévu, de préférence, sur la circonférence extérieure du disque de commande (26), une zone (52) à grand pouvoir réfléchissant dont la transition clair-obscur et la transition obscur-clair vers la zone adjacente du disque de commande (26) forme un repère (56 ou 54), qui est balayé par un détecteur de réflexion optique (50).

4. Procédé selon l'une des revendications précédentes, **caractérisé par le fait que**, après l'arrêt et jusqu'au nouveau balayage du repère (54 ou 56) balayé en dernier lieu, le moteur (34) tourne avec un apport d'énergie constant dans le temps.

5. Procédé selon la revendication 4, **caractérisé par le fait que** la proportion d'énergie qui est apportée au moteur (34) pour la rotation dans le sens inverse jusqu'au nouveau balayage du repère (54 ou 56) balayé en dernier lieu est déterminée, et que la quantité d'énergie qui est encore à apporter au moteur (34) augmente en fonction de l'augmentation de la proportion d'énergie.

6. Procédé selon l'une des revendications précédentes, **caractérisé par le fait que** le moteur utilisé est un moteur (34) à courant continu.

7. Procédé selon la revendication 6, **caractérisé par le fait que**, au moins après ledit arrêt (tf), de l'énergie électrique est apportée au moteur (34) à courant continu sous forme d'impulsions de courant (122, 124).

8. Procédé selon la revendication 7, **caractérisé par le fait que** les impulsions de courant (122) sont d'intensité et de durée constantes, et que leur nombre dépend de la durée de passage (T1).

9. Procédé selon la revendication 7, **caractérisé par le fait que**, après l'arrêt, le moteur (34) à courant continu est dans un premier temps alimenté par des premières impulsions de courant (122) de durée et d'intensité prédéterminées, qui font tourner le moteur (34) à courant continu dans le sens inverse (64 ou 66) jusqu'au nouveau balayage du repère (54 ou 56) balayé en dernier lieu, et qu'ensuite le moteur (34) à courant continu est alimenté par des secondes impulsions de courant (124) de durée et d'intensité prédéterminées, dont le nombre dépend du temps de passage (T1) et du nombre des premières impulsions de courant (122).

10. Procédé selon la revendication 9, **caractérisé par le fait que** les secondes impulsions de courant sont regroupées en trains d'impulsions (124) à durée de période constante, le nombre des secondes impulsions de courant de chaque train d'impulsion (124) et le nombre de trains d'impulsions (124) étant de préférence déterminés en fonction du temps de passage (T1) et du nombre des premières impulsions de courant (122).

11. Procédé selon l'une des revendications précédentes, **caractérisé par le fait que**, pendant le passage des repères (54, 56) devant le détecteur (50), un compteur (Z1) compte des impulsions de cadençage à durée de période constante, et que la quantité d'énergie apportée au moteur (34) dépend de la position du compteur (Z1).

12. Procédé selon l'une des revendications 9 à 11, **caractérisé par le fait que**, aux valeurs cumulées possibles provenant du nombre respectif des premières impulsions de courant (122) majorées de la valeur finale respective du compteur (Z1), on associe une première valeur numérique (P1), qui indique le nombre des secondes impulsions de courant de chaque train d'impulsions (124), ainsi qu'une seconde valeur numérique (P2), qui indique le nombre total des trains d'impulsions (124) alimentant le moteur (34) à courant continu, et que les première et seconde valeurs numériques (P1, P2) sont mémorisées dans une mémoire (72, 132), la première valeur numérique (P1) et la seconde (P2) étant de préférence regroupées et mémorisées dans une adresse (A), qui correspond à la valeur cumulée respective.

13. Procédé selon l'une des revendications précédentes, **caractérisé par le fait que**, pour l'arrêt et/ou après la fin de l'apport d'énergie électrique, le moteur (34) est freiné par court-circuit.

14. Procédé selon la revendication 13, **caractérisé par le fait que**, avant de tourner dans le sens inverse (64 ou 66), le moteur (34) est freiné par court-circuit pendant une durée d'attente (Tw) qui est d'autant plus courte que la durée de passage (T1) déterminée est plus longue.

15. Procédé selon l'une des revendications précédentes, **caractérisé par le fait que** le détecteur (50) est inactivé au début du mouvement de rotation (ta) pendant une durée prescrite, qui est de préférence au moins égale à la durée de passage (T1) à laquelle on s'attend.

16. Procédé selon l'une des revendications précédentes, **caractérisé par le fait que** le détecteur (50) a, entre la position de départ et la bissectrice (68) du secteur de visée (70), un écartement angulaire égal à l'angle de rotation (β).

17. Procédé selon l'une des revendications précédentes, **caractérisé par le fait que** l'écartement entre les repères (54, 56) est supérieur à la plage de détection du détecteur (50), l'écartement angulaire entre les repères (54, 56) se situant dans la plage de 1° à 45°, de préférence dans la plage de 3° à 5°.

18. Procédé selon l'une des revendications précédentes, **caractérisé par le fait que** la quantité d'énergie qui est déduite de la caractéristique énergie-durée de passage augmente en fonction de l'augmentation de la durée de passage (T1).
